(19) Europäisches Patentamt / European Patent Office / Office européen des brevets

(11) **EP 2 775 322 A2**

(12) **EUROPEAN PATENT APPLICATION**

(43) Date of publication:
**10.09.2014 Bulletin 2014/37**

(51) Int Cl.:
*G01V 1/36* (2006.01)      *G01V 1/38* (2006.01)

(21) Application number: **14157489.7**

(22) Date of filing: **03.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.03.2013   US 201361772210 P**

(71) Applicant: **CGG Services SA**
**91300 Massy (FR)**

(72) Inventor: **Gratacos, Bruno**
**91300 Massy (FR)**

(74) Representative: **Regimbeau**
**20, rue de Chazelles**
**75847 Paris Cedex 17 (FR)**

(54) **Apparatus and method for determination of far-field signature from variable-depth seismic data**

(57)   Computing device, system and method for calculating an estimate far-field signature ($\widetilde{FF}$) of a seismic source. The method includes receiving (200) seismic data collected with seismic sensors (128) having a variable-depth distribution so that ghost diversity is present; stacking (202) the seismic data at the sea floor; calculating (212) in a processor (802) the estimate far-field signature ($\widetilde{FF}$) based on a ghost period ($t_i$) and a relative amplitude ($\gamma_i$) of two traces from the seismic data; and generating a final image of sub-surface based on the estimate far-field signature ($\widetilde{FF}$).

Figure 2

```
        ┌──────────────────────────────────┐ ─ 200
        │      Receive Seismic Data        │
        └──────────────────────────────────┘
                        │
        ┌──────────────────────────────────┐ ─ 202
        │         Flatten, Stack           │
        └──────────────────────────────────┘
                        │
        ┌──────────────────────────────────┐ ─ 204
        │   Identify Travel Time of Ghost  │
        └──────────────────────────────────┘
                        │
        ┌──────────────────────────────────┐ ─ 206
        │            Set Model             │
        └──────────────────────────────────┘
                        │
        ┌──────────────────────────────────┐ ─ 208
        │   Estimate Travel Time of Ghost  │
        └──────────────────────────────────┘
                        │
        ┌──────────────────────────────────┐ ─ 210
        │  Relative Amplitude Determination │
        └──────────────────────────────────┘
                        │
        ┌──────────────────────────────────┐ ─ 212
        │        Deghost Far-Field         │
        └──────────────────────────────────┘
                        │
        ┌──────────────────────────────────┐ ─ 214
        │ Use Deghost Far-Field for Processing │
        └──────────────────────────────────┘
                        │
        ┌──────────────────────────────────┐ ─ 216
        │       Generate Final Image       │
        └──────────────────────────────────┘
```

EP 2 775 322 A2

**Description**

BACKGROUND

TECHNICAL FIELD

Embodiments of the subject matter disclosed herein generally relate to methods and systems and, more particularly, to mechanisms and techniques for determining a far-field signature based on seismic data collected at variable depths.

**DISCUSSION OF THE BACKGROUND**

Reflection seismology is a method of geophysical exploration to determine properties of a portion of a subsurface layer in the earth; such information is especially helpful in the oil and gas industry. In marine seismic prospection, a seismic source is used in a body of water to generate a seismic signal that propagates into the earth and is at least partially reflected by subsurface seismic reflectors. Seismic sensors located at the bottom of the sea, or in the body of water at a known depth, record the reflections, and the resulting seismic data may be processed to evaluate the location and depth of the subsurface reflectors. By measuring the time it takes for the reflections (e.g., acoustic signal) to travel from the source to plural receivers, it is possible to estimate the depth and/or composition of the features causing such reflections. These features may be associated with subterranean hydrocarbon deposits.

For marine applications, seismic sources are essentially impulsive (e.g., compressed air is suddenly allowed to expand) or vibratory. One of the most used impulsive sources is air guns, which produce a high amount of acoustic energy over a short time. Such a source is towed by a vessel either at the water surface or at a certain depth. Acoustic waves from the air gun propagate in all directions. A typical frequency range of the emitted acoustic waves is between 2 and 300 Hz.

A vibratory source, which may include hydraulically- or electrically-powered sources and sources employing piezoelectric or magnetostrictive material, is described in Patent Application Serial No. 13/415,216, (herein '216) "Source for Marine Seismic Acquisition and Method," filed on March 8, 2012, the entire content of which is incorporated herein by reference.

A characteristic of a seismic source, be it impulsive or vibratory, is its far-field signature. The far-field signature of the seismic source refers to the shape of the signal it generates. The signature of the seismic source changes as seismic waves propagate away from it. If a given direction is considered, the signature varies with the distance from the seismic source along that direction. However, at some given distance, the signature achieves a stable shape, i.e., a shape unlikely to change further as the waves continue to propagate. In other words, beyond this given distance, the signature remains the same. Note that the amplitude decreases inversely proportional to the distance even past this given distance. The region where the signature shape does not change significantly with distance is the far-field domain of the seismic source, and its signature in this domain is called the far-field signature.

More specifically, when the seismic source is shot, it produces a complex output pressure pulse in the water. If this pressure pulse is converted to an electrical signal, for example, by using a near-field hydrophone, the electrical signal may include a short wavetrain whose envelope displays an initial fast rise followed by several rapidly-decaying oscillations. An envelope of the wavetrain may be, for example, about 800 ms long, and this envelop may be the "far-field signature" of the source.

Determining the far-field signature is desirable, for example, because, traditionally, an estimate of the far-field signature is used to deconvolve the recorded seismic data to minimize interference and/or to obtain zero-phase wavelets. This process is known as de-signature. There are other reasons for obtaining the far-field signature as will be recognized by those skilled in the art.

Thus, various methods are used to determine the far-field signature. For example, European Patent Application EP0047100B1, "Improvements in/or relating to determination of far-field signatures, for instance of seismic sources," the entire content of which is incorporated herein by reference, presents a method applicable to air guns for determining the far-field signature generated by an array of several units. Each unit is provided with its "near-field hydrophone" located known distance from the source. The method sequentially fires all units (i.e., when one unit is fired, the other units are not fired) located in the array, which implies that interactions between units are neglected. By knowing some environmental parameters (reflection at sea/air interface, source depth, etc.), the far-field signature can be estimated by summation of the individual source unit's signatures as detected by each near-field hydrophone and by taking into account (synthetically) the ghost effect.

U.S. Patent No. 4,868,794, "Method of accumulation data for use in determining the signatures of arrays of marine seismic sources," presents a similar method as discussed above. However, this method provides the far-field signature of an array when all units are fired synchronously, which implies that the interactions between sources are taken into account. Each seismic unit can be represented by a notional near-field signature given by post-processed near-field data. The far-field signature array estimate can then be determined at any desired point below the sea surface, and not only along the vertical axis generally used for direct far-field measurement. However, there is a problem with this method: When a near-field sensor is used to determine the sound pressure of a given source unit, that near-field sensor also detects sound pressures from other source units and their interactions. Thus, a processing step (for determining the notional near-field signature) is necessary to separate the sound pressures from the other source units and to remove these components. Because this processing step is time-consuming and may introduce inaccuracies, not having to perform this step is desirable.

Another technique described in GB 2,468,912, "Processing seismic data," the entire content of which is included herein by reference, presents a method for providing quantitative error in far-field signature estimation by using both the method described above (based on notional near-field signature) and data measured at specific receiver points along streamers. These data are compared and can show if any errors notional signatures estimation can lead to errors in far-field signature estimation.

However, it is difficult, if not impossible, to measure the far-field signature of a source in a direct way as noted in the above paragraphs. For example, the water depth may be insufficient to prevent the measurements from being substantially affected by sea-bottom reflections. Other practical obstacles are known that distort true far-field measurements. Thus, a far-field signature may be estimated according to a model of the far-field signature based on measured physical parameters.

Further, the methods discussed above suffer from one or more disadvantages. For example, if the near-field sensor is used to record the near-field signature, the measurement may not be accurate or the sensor may fail. If a far-field sensor is used (which should be located at a minimum depth, which varies in the seismic community; however, an example is at least 300 m below the source), the equipment for such measurements is expensive and not always reliable. Methods that do not rely on a sensor but use various models to calculate the far-field signature are not accurate and require intensive and time-consuming processing steps. Also, they may not be applicable for shallow water applications.

Thus, it is desired to obtain the far-field signature of a marine source with no or minimum additional equipment, in a reliable way, based on real, rather than estimated, data to overcome the afore-described problems and drawbacks.

## SUMMARY

According to an embodiment, there is a method for calculating an estimate far-field signature ($\overline{FF}$) of a seismic source. The method includes receiving seismic data collected with seismic sensors having a variable-depth distribution so that ghost diversity is present; stacking the seismic data at the sea floor; calculating in a processor the estimate far-field signature ($\overline{FF}$) based on a ghost period ($t_i$) and a relative amplitude ($\gamma_i$) of two traces from the seismic data; and generating a final image of sub-surface based on the estimate far-field signature ($\overline{FF}$).

According to another embodiment, there is a method for calculating an estimate far-field signature ($\overline{FF}$) of a seismic source. The method includes receiving seismic data collected with seismic sensors having a variable-depth distribution so that ghost diversity is present; stacking the seismic data at the sea floor; calculating in a processor the estimate far-field signature ($\overline{FF}$) based on a ghost period ($t_i$) and a relative amplitude ($\gamma_i$) of two traces from the seismic data, wherein the estimate far-field signature ($\overline{FF}$) is given by $\widetilde{FF(f)} = \frac{\sum_i T_i(f) \cdot \overline{G_i(f)}}{\sum_i |G_i(f)|^2}$, wherein $T_i$ is a ghosted estimate far-field signature, $G_i$ a corresponding ghost, and "i" is an index for a given trace; and generating a final image of sub-surface based on the estimate far-field signature ($\overline{FF}$).

According to yet another embodiment, there is a method for calculating an estimate far-field signature ($\overline{FF}$) of a seismic source. The method includes receiving seismic data collected with seismic sensors having a variable-depth distribution so that ghost diversity is present; stacking the seismic data at the sea floor; calculating in a processor the estimate far-field signature ($\overline{FF}$) based on a ghost period ($t_i$) and a relative amplitude ($\gamma_i$) of two traces from the seismic data, wherein the estimate far-field signature ($\overline{FF}$) is given by $\widetilde{FF(f)} = \frac{\sum_i T_i(f) \cdot \overline{G_i(f)}}{\sum_i |G_i(f)|^2}$, wherein $T_i$ is a ghosted estimate far-field signature, $G_i$ a corresponding ghost, and "i" is an index for a given trace; deghosting the estimate far-field signature ($\overline{FF}$) to obtained a deghosted far-field signature (F); and generating a final image of sub-surface based on the deghosted far-field signature (F).

The above paragraphs in the Summary section present a simplified summary of the embodiments discussed later with the purpose of offering a basic understanding of some novel aspects to the reader. However, this section is not intended to be exhaustive or to provide critical features of the invention.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 is a schematic diagram of a seismic survey system that uses a far-field sensor for determining a far-field signature of a seismic source;
Figure 2 is a flowchart of a method for calculating a far-field signature of a seismic source;
Figure 3 is a graph illustrating input data for calculating a far-field signature;
Figure 4 is a graph illustrating sea-floor stack, ghosted estimate far-field signature, and a difference therebetween;
Figure 5 is a flowchart of a processing method for generating a final image of a surveyed subsurface;
Figure 6 is a schematic diagram illustrating a multi-component seismic source;
Figure 7 is a schematic diagram of a variable-depth streamer; and
Figure 8 is a schematic diagram of a computing device that implements one or more methods discussed herein.

These drawings illustrate specific embodiments described herein and are not intended to limit the invention to these particular embodiments. Those skilled in the art would recognize that the invention is susceptible to various modifications or alternative forms.

## DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to marine seismic data acquired with a variable-depth streamer. However, the embodiments to be discussed next are not limited to this type of data acquisition, but may be applied to other seismic acquisition systems, for example, those using underwater vehicles or ocean bottom nodes located at different depths.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an exemplary embodiment, there is a method for calculating a far-field signature of a marine source based on seismic data acquired at different depths relative to the water surface.

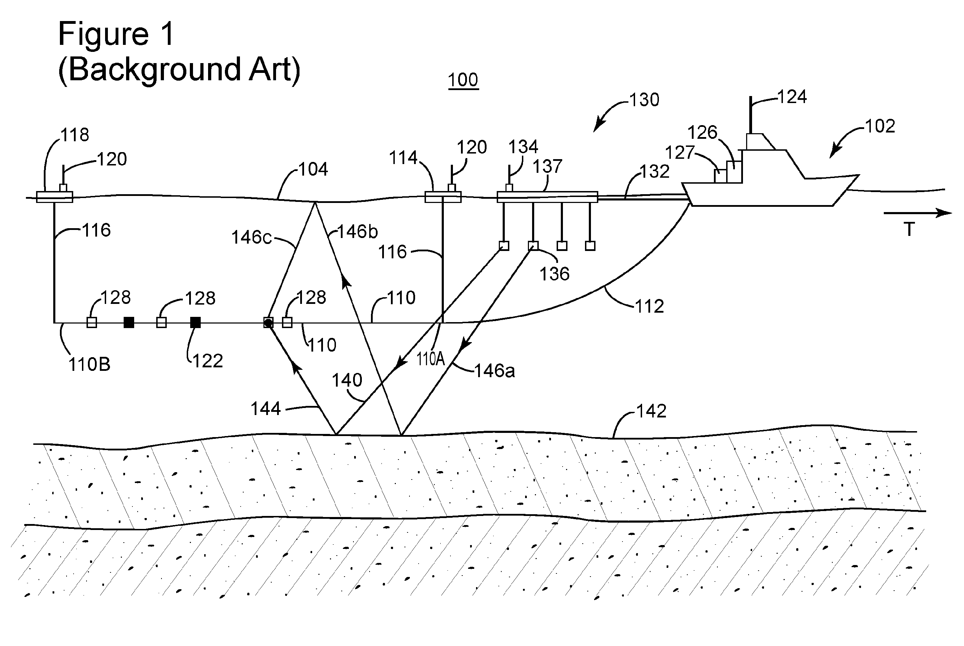

Before discussing the method for calculating the far-field signature of a seismic source, a seismic survey system 100 is discussed with reference to Figure 1. System 100 includes a vessel 102 that tows plural streamers 110 (only one is shown in the figure for simplicity) and a seismic source 130. Streamer 110 is attached through a lead-in cable (or other cables) 112 to vessel 102, while source 130 is attached through an umbilical 132 to the vessel. A head float 114, which floats at the water surface 104, is connected through a cable 116 to a head 110A of streamer 110, while a tail buoy 118 is connected through a similar cable 116 to a tail 110B of streamer 110. Head float 114 and tail buoy 118 maintain a depth of the streamer and are also provided with GPS (Global Positioning System) or other communication equipment 120 for determining a position of the streamer.

In this regard, it is known that an exact position of each sensor 122 (only a couple of them are illustrated in Figure 1 for simplicity) is important to be known when processing the seismic data recorded by these sensors. Thus, vessel 102 is also provided with GPS 124 and a controller 126 that collects the position data associated with the head and tail of the streamer and also the position of the vessel and calculates, based on the known geometry of the streamer, the absolute position of each sensor.

The same happens for source 130. A GPS system 134 is located on float 137 for determining the position of the source elements 136. Source elements 136 are connected to float 137 to travel at desired depths below the water surface 104. During operation, vessel 102 follows a predetermined path T while source elements (usually air guns) 136 emit seismic waves 140. These waves bounce off the ocean bottom 142 and other layer interfaces below the ocean bottom 142 and propagate as reflected/refracted waves 144 that are recorded (as primaries) by sensors 122. However, each primary has an associated ghost 146c, which corresponds to another wave 146a generated by source 130, reflected as wave 146b from the ocean bottom 142, and then further reflected from the water surface 104. The positions of both the source element 136 and recording sensor 122 are determined with the GPS systems 120 and 134 and recorded together with the seismic data in a storage device 127 onboard the vessel.

However, having a GPS system at the two ends of a 10 km long streamer does not produce accurate results for the sensors 122 located far from both ends. Thus, in an effort to improve the accurate location of the sensors, modern seismic survey systems use acoustic transceivers 128 distributed along the streamer at known locations, and these transceivers interrogate adjacent transceivers, located on the neighboring streamers, for detecting the relative positions of each receiver along all streamers. Combined with the traditional GPS, such a system is capable of providing more accurate positioning of the sensors.

With this background, a method for calculating a far-field signature for a seismic source, be it impulsive, vibratory or of another nature, is now discussed. The method relies on seismic data acquired with seismic sensors located at different depths. An example of seismic sensors located along a streamer was provided with regard to Figure 1. Note that streamer 110 may be a variable-depth streamer as will be discussed later. However, it is also possible that underwater vehicles equipped with appropriate seismic sensors acquire the seismic data. Alternatively, it is possible to have ocean bottom nodes, i.e., sensors located on the ocean bottom, that follow a variable-depth ocean bottom to acquire the seismic data.

A common feature of seismic data acquired at different depths is the diversity of the receiver ghosts, i.e., the fact that different parts of the seismic data are recorded at different depths. Because of the different depths and because the ghost is reflected from the water surface, the recorded ghosts have different travel times, and are thus diverse. As long as this diversity is achieved, it is irrelevant whether the seismic data was collected using depth-varying streamers, ocean bottom nodes, underwater vehicles or any other method.

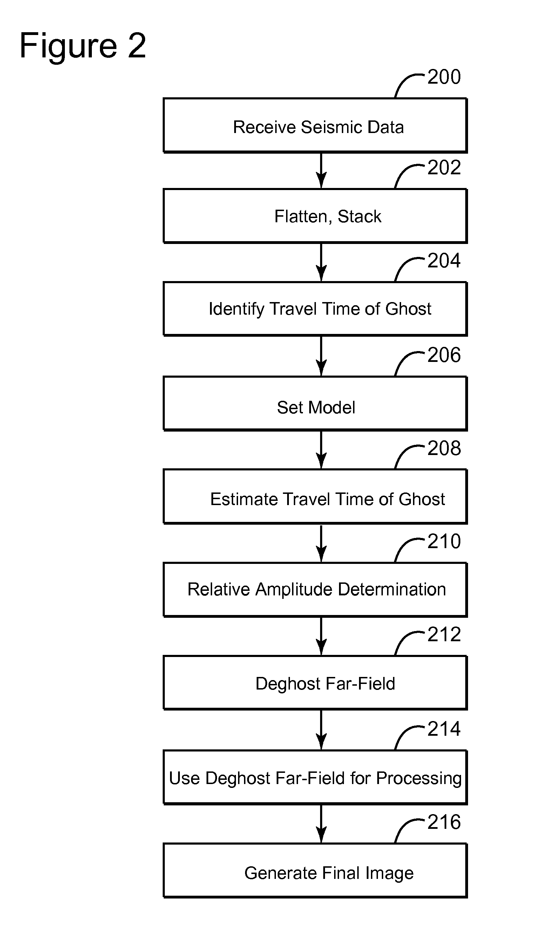

With this diverse seismic data, one goal of the method is to extract an estimate of the far-field signature. This may be achieved as now discussed with regard to Figure 2. Figure 2 is a flowchart of the method for calculating the far-field signature of a seismic source. Note that a seismic source may include one or more source elements, i.e., an air gun, a vibratory element, a combination of them, etc. In step 200, seismic data is received at a processing device, which will be discussed later. The seismic data exhibits receiver ghost diversity because the seismic sensors' depths (hydrophone, particle motion sensor, or any appropriate seismic sensors or combinations thereof) vary with the offset as already discussed. In step 202, the seismic data is flattened and then stacked at the sea floor. This step involves picking first arrivals and then the picks are aligned at the same time. Given that the selected data covers in general the full area of the survey, the geological diversity is sufficient to remove any imprints by events.

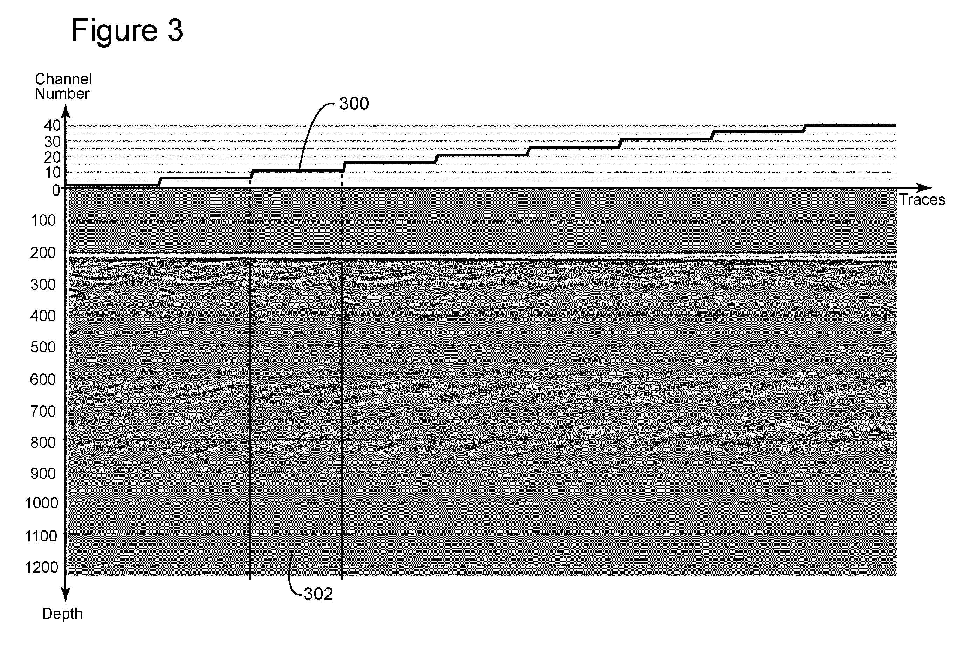

Figure 3 illustrates the seismic data after being flattened to the sea floor, and this data corresponds to various channels associated with a streamer. For example, the upper part of the graph shows various channels, e.g., channel 6 corresponds to reference number 300, and the lower part of the graph illustrates corresponding traces 302. A channel represents the seismic data collected from a given number of seismic sensors (three for example for a Sercel streamer). Each channel includes seismic data collected from a different depth because a depth of the seismic sensors along the streamer changes. This property provides the needed diversity for calculating the far-field signature.

The data corresponding to a single channel may be written as:

$$ch_{CDP}^{i} = FF * G_i * G_{eol(CDP)}, \quad (1)$$

wherein "i" is the channel number, CDP is the common depth point, FF is the actual far-field signature, $G_i$ is the "i" receiver ghost, and $G_{eol}$ is the actual reflected wavefield by the geology below the sea bed. If the data from each channel is summed for all the CDP (i.e., the data is stacked), it yields a ghosted estimate far-field $T_i(f)$, which is given by:

$$T_i(f) = \frac{1}{n}\sum_{CDP} ch_{CDP}^{i} = FF * G_i, \quad (2)$$

where the sum is performed for all the CDP points, i.e., n measurements.

In the following, it is considered that seismic data has been recorded using hydrophones. However, the same method may be applied if using another type of seismic sensor provided that ghost $G_i(f)$ is changed accordingly. Assuming the hydrophone sensitivities have been corrected, and the ghost travel-times $t_i$ have been identified as indicated in step 204, the following equations hold for the estimated far-field signature $\overline{FF}$:

$$T_i(f) = G_i(f) \cdot FF(f), \quad (3)$$

$$G_i(f) = 1 - e^{2j\pi f t_i}, \text{ and } (4)$$

$$\widehat{FF(f)} = \frac{\sum_i T_i(f) \cdot \overline{G_i(f)}}{\sum_i |G_i(f)|^2} \quad (5)$$

where FF is the true (actual) far-field signature, f is the frequency, j is the imaginary number, and equation (5) describes in the numerator a multiplication in the frequency domain between the ghosted estimate far-field $T_i$ and the corresponding receiver ghost $G_i$, and the denominator includes the auto-correlation of the receiver ghost $G_i$. Note that receiver ghost $G_i$ depends on ghost travel-time $t_i$, which depends on the depth of the seismic sensor. Thus, equation (4) encompasses the ghost diversity.

Setting up in step 206 the mathematical model described by equations (3)-(5), and considering that applying a receiver ghost $G_j$ to $t_i$ and vice versa should generate an identical result, providing the ghost parameters are correctly chosen, the ghost travel-time $t_i$ can be calculated in step 208 as follows. For example, consider two ghosted estimate far-field signatures $T_i$ and $T_j$ aligned on their first arrival. The two ghosted estimate far-field signatures are given by:

$$X_i^j(t) = T_i(t) + rT_i(t - t_j), \text{ and } (6)$$

$$X_j^i(t) = T_j(t) + rT_j(t - t_i), \quad (7)$$

where $X_i^j$ is the cross-ghosted far-field, i.e., applying the ghost operator of trace "i" to trace "j." A difference between equations (6) and (7) is equal to difference function $\varepsilon$:

$$\varepsilon_i^j(t) = X_i^j(t) - X_j^i(t) = -\varepsilon_j^i(t). \quad (8)$$

Note that difference function $\varepsilon$ depends on travel-time t, trace "i" and ghost "j." Later, the same difference function is summed over all travel-times or over all pairs of traces and ghosts.

Various algorithms may be applied to resolve equation (8) to find out the ghost travel-time $t_i$. For example, a Newton scheme may be used to solve nonlinear equations. The Newton scheme may be applied to an error function E which is defined later. The Newton scheme requires not only an error function E but also its gradient and hessian. The error function E may be defined as the sum over all pairs i and j and all travel-times for the difference function $\varepsilon$, i.e., E is given by:

$$E = \frac{1}{2} \sum_{t,i,j} \left| \varepsilon_i^j(t) \right|^2. \quad (9)$$

To calculate the gradient and hessian (i.e., the first and second order derivatives) of the error function E, it is necessary to know the gradient for the difference function $\varepsilon$. The gradient of the difference function $\varepsilon$ is given by equations:

$$\frac{\partial \varepsilon_i^j(t)}{\partial t_i} = rT_j'(t - t_i), \text{ and } (10)$$

$$\frac{\partial \varepsilon_i^j(t)}{\partial t_j} = -rT_i'(t - t_j), \quad (11)$$

Based on equations (10) and (11), the gradient of the error function E is calculated as being:

$$\frac{\partial E}{\partial t_i} = \sum_t \varepsilon_i^j(t) \frac{\partial \varepsilon_i^j(t)}{\partial t_i}, \text{ and } (12)$$

$$\frac{\partial E}{\partial t_j} = \sum_t \varepsilon_j^i(t) \frac{\partial \varepsilon_j^i(t)}{\partial t_i}. \quad (13)$$

The hessian of the error function is given by the following equations:

$$\frac{\partial^2 E}{\partial t_i \partial t_j} = \sum_t \frac{\partial \varepsilon_i^j(t)}{\partial t_i} \frac{\partial \varepsilon_j^i(t)}{\partial t_i}, \quad (14)$$

$$\frac{\partial^2 E}{\partial t_i^2} = \sum_t \frac{\partial \varepsilon_i^j(t)}{\partial t_i}^2 - r\varepsilon_i^j T_j''(t - t_i), \text{ and } (15)$$

$$\frac{\partial^2 E}{\partial t_j^2} = \sum_t \frac{\partial \varepsilon_j^i(t)}{\partial t_j}^2 + r\varepsilon_i^j T_i''(t - t_j). (16)$$

Applying the Newton algorithm iteratively to equations (9) and (12)-(16), an estimate of $t_i$ is achieved. In order to converge to a true minimum, at each iteration, the data is high-cut filtered, with increasing maximum frequency as the algorithm progresses. This concludes step 208 illustrated in Figure 2.

Next, a relative amplitude determination is performed in step 210. This step takes place when the receivers have different signatures or when the seismic data used is not the same for all channels (e.g., due to editing; for this situation, it is possible to determine a channel-dependent gain). Assuming that $t_0$ is a reference trace for amplitudes and $\gamma_i$ is the gain that needs to be applied to trace $t_i$ to match to from an amplitude point of view, then, for any two traces i and j, the following equations hold:

$$\varepsilon_i^j = \sum_t |\gamma_i X_i^j(t) - \gamma_j X_j^i(t)|^2, \text{ and } (17)$$

$$\phi_{i,j} = \sum_t X_i^j(t) * X_j^i(t), (18)$$

where equation (17) reflects the difference $\varepsilon$ summed over all possible travel times $t_i$, while equation (18) reflects the correlation of trace "i" ghosted with ghost "j" and trace "j" ghosted with ghost "i." In addition, the following equations also hold:

$$\begin{pmatrix} \phi_{i,i} & -\phi_{i,j} \\ -\phi_{j,i} & \phi_{j,j} \end{pmatrix} \begin{pmatrix} \gamma_i \\ \gamma_j \end{pmatrix} = 0, \text{ and } (19)$$

$$\phi_{i,i}\,\gamma_i = \phi_{i,0}. \ (20)$$

This system of equations may be solved, for example, by applying a Choleski algorithm, which is a known matrix decomposition technique, and for this reason no details are provided herein.

Next, the calculated far-field may be deghosted, in terms of the source ghost, in step 212 in Figure 2. For this step, the travel-time from source to surface is considered to be $\delta$ and -r is the surface reflectivity. The impulsive part of the non-ghosted far-field (note that a far-field signature may have an impulsive part, a ghost part, the ghost part being later in time than the impulsive part and a bubble part which is even later in time than the impulsive part) can be iteratively found using a Newton algorithm and time-summing over the impulsive part of the non-ghosted far-field based on the following equations:

$$\varepsilon(t) = rFF(t) + FF(t + \delta), (21)$$

$$E = \tfrac{1}{2}\sum_{t \leq 4ms} |\varepsilon(t)|^2 \text{ and } (22)$$

$$\begin{pmatrix} \Delta\delta \\ \Delta r \end{pmatrix} = -H^{-1} \cdot G \ (23)$$

where FF is the receiver deghosted far-field signature, G is the gradient and H is the hessian of E with $\delta$ and r being the variables. The gradient G is given by:

$$G = \begin{pmatrix} \sum_t FF'(t + \delta)\varepsilon(t) \\ \sum_t FF(t)\varepsilon(t) \end{pmatrix} \text{ and } \ (24)$$

the hessian H is given by:

$$H = \begin{pmatrix} \sum_t FF'^{(t+\delta)^2} + FF''(t + \delta)\varepsilon(t) & \sum_t FF(t)FF'(t + \delta) \\ \sum_t FF(t)FF'(t + \delta) & \sum_t FF(t)^2 \end{pmatrix}. \ (25)$$

The Newton algorithm may be applied to these equations starting with an initial value of 1.0 for r and $\delta$ being the FF picked minimum, for example, $\delta$ may be given by $\frac{1}{2}\frac{S_+ + S_-}{2S_0 - S_+ - S_-}$ where S_-, So and S_+ are three points closest to the minimum.

The source deghosted far-field signature $F_0(t)$ can be expressed as the convolution of FF with the inverse of the source ghost (which is related to the reflectivity r):

$$F_0(t) = \sum_{i=0}^{\infty} r^i * FF(t - i\delta). \quad (26)$$

This operation is imperfect although it gives the right result at the earliest times, i.e., during the impulsive part of the FF. Once the impulsive part has been isolated, it can be ghosted again and remove from the FF, thus, leaving the bubble, which can then be spectrally deconvolved.

Having found the deghosted far-field signature, it is now possible to apply various processing algorithms (to be discussed later) in step 214 for generating a final image in step 216 of the surveyed subsurface.

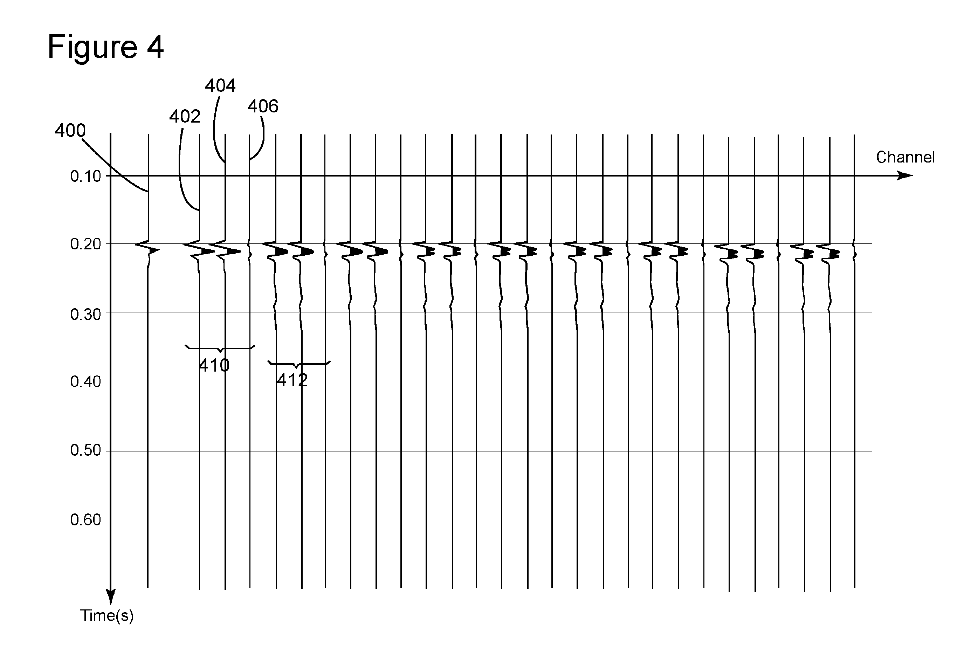

Results of the various steps illustrated in Figure 2 and discussed above are illustrated in Figure 4, which shows the estimated far-field signature 400, the sea-floor stack 402, the ghosted estimated far-field FF 404, and the difference 406 between the sea-floor stack 402 and the ghosted estimated far-field 404. Note that the X axis of the figure shows the number of channels (see also Figure 3), while the Y axis of the figure shows the time. The first group of traces corresponds to channel 1, the second group of traces correspond to channel 6, and so on, with a depth of the seismic receivers increasing with the number of channels.

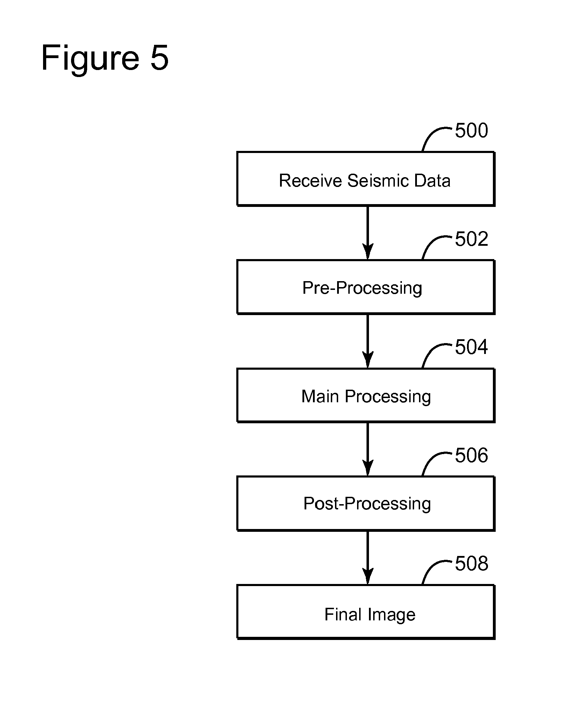

Seismic data processed for estimating a far-field signature and/or deghosted far-field signature may be processed in a corresponding processing device for generating a final image of the surveyed subsurface. For example, the seismic data may be received in step 500 of Figure 5 at the processing device. In step 502 pre-processing methods are applied, e.g., demultiple, signature deconvolution, trace summing, vibroseis correlation, resampling, etc. In step 504 the main processing takes place, e.g., deconvolution, amplitude analysis, statics determination, common middle point gathering, velocity analysis, normal move-out correction, muting, trace equalization, stacking, noise rejection, amplitude equalization, etc. In step 506 final or post-processing methods are applied, e.g. migration, wavelet processing, inversion, etc. In step 508 the final image of the subsurface is generated. Note that the method discussed with regard to Figure 2 for determining the far-field signature and/or deghosted far-field signature may be part of any of steps 502, 504 and 506.

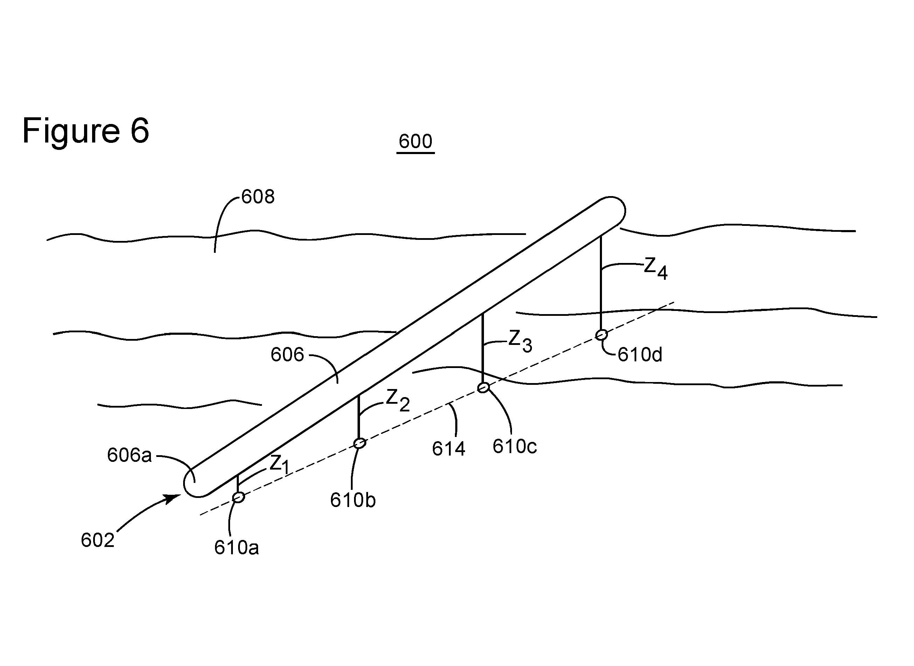

The seismic data received in step 200 in Figure 2 or in step 500 in Figure 5 may be generated with a source array having a horizontal distribution or with a multi-level source array. A source array includes plural source elements. A source element may be impulsive, e.g., an air gun. A multi-level source 600 is illustrated in Figure 6 as having one or more sub-arrays. The first sub-array 602 has a float 606 configured to float at the water surface 608 or underwater at a predetermined depth. Plural source elements 610a-d are suspended from float 606 in a known manner. A first source element 610a may be suspended closest to head 606a of float 606, at a first depth z1. A second source element 610b may be suspended next, at a second depth z2, different from z1. A third source element 610c may be suspended next, at a third depth z3, different from z1 and z2, and so on. Figure 6 shows, for simplicity, only four source elements 610a-d, but an actual implementation may have any desired number of source points. In one application, because the source elements are distributed at different depths, the source elements at the different depths are not simultaneously activated. In other words, the source array is synchronized, i.e., a deeper source element is activated later in time (e.g., 2 ms for 3 m depth difference when the speed of sound in water is 1,500 m/s) such that corresponding sound signals produced by the plural source elements coalesce, and thus, the overall sound signal produced by the source array appears to be a single sound signal. In one embodiment, the high-frequency source elements are simultaneously activated in a flip-flop mode with the source elements of the low-frequency source elements. In another embodiment, all the source elements are simultaneously activated with incoherent, coded signals so the recorded seismic signals can be separated based on the source element that emitted that signal.

The depths z1 to z4 of the source elements of the first sub-array 602 may obey various relationships. In one application, the depths of the source elements increase from the head toward the tail of the float, i.e., z1 <z2<z3<z4. In another application, the depths of the source elements decrease from the head to the tail of the float. In another application, the source elements are slanted, i.e., on an imaginary line 614. In still another application, line 614 is straight. In yet another application, line 614 is curved, e.g., part of a parabola, circle, hyperbola, etc. In one application, the depth of the first source element for the sub-array 1002 is about 5 m and the largest depth of the last source element is about 8 m. In a variation of this embodiment, the depth range is between 8.5 and 10.5 m or between 11 and 14 m. In another variation of this embodiment, when line 614 is straight, the depths of the source elements increase by 0.5 m from one source element to an adjacent source element. Those skilled in the art would recognize that these ranges are exemplary and these numbers may vary from survey to survey. A common feature of all these embodiments is that the source elements have variable depths so that a single sub-array exhibits multiple-level source elements.

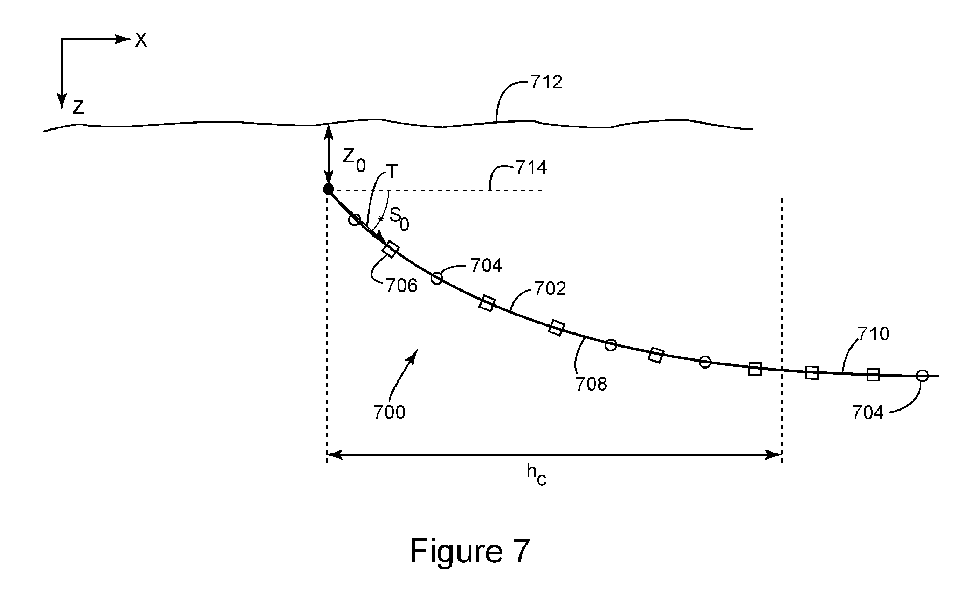

The above embodiments were discussed without specifying what type of seismic receivers is used to record the seismic data. In this sense, it is known in the art to use, for a marine seismic survey, streamers towed by one or more vessels, and the streamers include the seismic receivers. The streamers may be horizontal or slanted or have a curved profile as illustrated in Figure 7.

The curved streamer 700 of Figure 7 includes a body 702 having a predetermined length, plural detectors 704 provided along the body, and plural birds 706 provided along the body for maintaining the selected curved profile. The streamer is configured to flow underwater when towed such that the plural detectors are distributed along the curved profile. The curved profile may be described by a parameterized curve, e.g., a curve described by (i) a depth $z_0$ of a first detector (measured from the water surface 712), (ii) a slope $s_0$ of a first portion T of the body with an axis 714 parallel with the water surface 712, and (iii) a predetermined horizontal distance $h_c$ between the first detector and an end of the curved profile. Note that not the entire streamer has to have the curved profile. In other words, the curved profile should not be construed to always apply to the entire length of the streamer. While this situation is possible, the curved profile may be applied only to a portion 708 of the streamer. In other words, the streamer may have (i) only a portion 708 having the curved profile or (ii) a portion 708 having the curved profile and a portion 710 having a flat profile, with the two portions attached to each other.

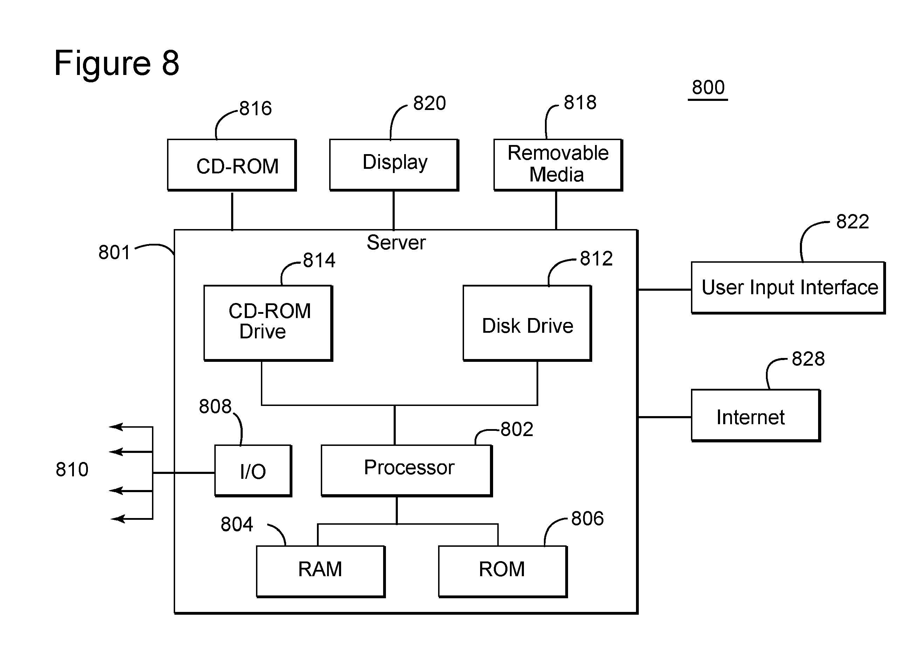

An example of a representative processing device capable of carrying out operations in accordance with the embodiments discussed above is illustrated in Figure 8. Hardware, firmware, software or a combination thereof may be used to perform the various steps and operations described herein. The processing device 800 of Figure 8 is an exemplary computing structure that may be used in connection with such a system, and it may implement any of the processes and methods discussed above or combinations of them.

The exemplary processing device 800 suitable for performing the activities described in the exemplary embodiments may include server 801. Such a server 801 may include a central processor unit (CPU) 802 coupled to a random access memory (RAM) 804 and to a read-only memory (ROM) 806. The ROM 806 may also be other types of storage media to store programs, such as programmable ROM (PROM), erasable PROM (EPROM), etc. Processor 802 may communicate with other internal and external components through input/output (I/O) circuitry 808 and bussing 810 to provide control signals and the like. For example, processor 802 may communicate with the sensors, electro-magnetic actuator system and/or the pressure mechanism of each source element. Processor 802 carries out a variety of functions as are known in the art, as dictated by software and/or firmware instructions.

Server 801 may also include one or more data storage devices, including disk drives 812, CD-ROM drives 814, and other hardware capable of reading and/or storing information, such as a DVD, etc. In one embodiment, software for carrying out the above-discussed steps may be stored and distributed on a CD-ROM 816, removable media 818 or other form of media capable of storing information. The storage media may be inserted into, and read by, devices such as the CD-ROM drive 814, disk drive 812, etc. Server 801 may be coupled to a display 820, which may be any type of known display or presentation screen, such as LCD, plasma displays, cathode ray tubes (CRT), etc. A user input interface 822 is provided, including one or more user interface mechanisms such as a mouse, keyboard, microphone, touch pad, touch screen, voice-recognition system, etc.

Server 801 may be coupled to other computing devices, such as the equipment of a vessel, via a network. The server may be part of a larger network configuration as in a global area network (GAN) such as the Internet 828, which allows ultimate connection to the various landline and/or mobile client/watcher devices.

As also will be appreciated by one skilled in the art, the exemplary embodiments may be embodied in a wireless communication device, a telecommunication network, as a method or in a computer program product. Accordingly, the exemplary embodiments may take the form of an entirely hardware embodiment or an embodiment combining hardware and software aspects. Further, the exemplary embodiments may take the form of a computer program product stored on a computer-readable storage medium having computer-readable instructions embodied in the medium. Any suitable computer-readable medium may be utilized, including hard disks, CD-ROMs, digital versatile discs (DVD), optical storage devices or magnetic storage devices such a floppy disk or magnetic tape. Other non-limiting examples of computer-readable media include flash-type memories or other known types of memories.

The disclosed exemplary embodiments provide a method and a computing device for calculating a far-field signature and/or deghosted far-field signature for a seismic source. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

**Claims**

1. A method for calculating an estimate far-field signature ($\overline{\overline{FF}}$) of a seismic source, the method comprising:

   receiving (200) seismic data collected with seismic sensors (128) having a variable-depth distribution so that ghost diversity is present;
   stacking (202) the seismic data at the sea floor;
   calculating (212) in a processor (802) the estimate far-field signature ($\overline{\overline{FF}}$) based on a ghost period ($t_i$) and a relative amplitude ($\gamma_i$) of two traces from the seismic data; and
   generating a final image of sub-surface based on the estimate far-field signature ($\overline{\overline{FF}}$).

2. The method of Claim 1, wherein the step of calculating comprises:

   defining an error function (E); and
   applying a Newton algorithm to the error function, its gradient and its hessian for determining the ghost period.

3. The method of Claim 2, wherein the ghost period is a travel time of a ghost.

4. The method of Claim 2, wherein the error function (E) is defined as a sum over travel times of squares of values of a difference function ($\varepsilon$) for each trace "i" and ghost "j."

5. The method of Claim 4, wherein the difference function ($\varepsilon$) is defined as a difference between (i) a first trace convoluted with a second ghost and (ii) a second trace convoluted with a first ghost, the first trace being associated with the first ghost and the second trace being associated with the second ghost.

6. The method of Claim 4, wherein the step of calculating further comprises:

   determining the relative amplitude ($\gamma_i$) for each pair of trace "i" and ghost "j" based on a sum over travel times of the difference function ($\varepsilon$).

7. The method of Claim 6, further comprising:

   deghosting the estimate far-field signature ($\overline{\overline{FF}}$) based on the error function (E) that is the sum of squares of the difference function ($\varepsilon$) summed over all pairs of traces and ghosts.

8. The method of Claim 1, further comprising:

   deghosting the estimate far-field signature ($\overline{\overline{FF}}$) based on an error function (E) that depends on a difference function ($\varepsilon$), wherein the difference function is a sum of all differences between pairs of traces and ghosts correlated with each other.

9. The method of Claim 1, wherein the estimate far-field signature ($\overline{\overline{FF}}$) is equal to a ratio between (i) a sum over all traces of convolutions between each ghosted estimate far-field signature ($T_i$) and its corresponding, complex conjugated, ghost ($G_i$) and (ii) an autocorrelation of the ghosts ($G_i$) over all traces.

10. The method of Claim 9, wherein the ghosted estimate far-field signature ($T_i$) for a given trace "i" is a convolution of a corresponding ghost ($G_i$) and a true far-field signature (FF).

11. The method of Claim 1, further comprising:

    collecting the seismic data with a streamer having a variable-depth profile.

12. The method of Claim 1, further comprising:

    collecting the seismic data with plural underwater nodes distributed at different depths and each node having a seismic sensor.

**13.** A method for calculating an estimate far-field signature ($\overline{FF}$) of a seismic source, the method comprising:

receiving (200) seismic data collected with seismic sensors (128) having a variable-depth distribution so that ghost diversity is present;

stacking (202) the seismic data at the sea floor;

calculating (212) in a processor (802) the estimate far-field signature ($\overline{FF}$) based on a ghost period ($t_i$) and a relative amplitude ($\gamma_i$) of two traces from the seismic data, wherein the estimate far-field signature ($\overline{FF}$) is given

by $\widehat{\overline{FF}(f)} = \frac{\sum_i T_i(f) \cdot \overline{G_i(f)}}{\sum_i |G_i(f)|^2}$, wherein $T_i$ is a ghosted estimate far-field signature, $G_i$ a corresponding ghost, and "i" is an index for a given trace; and

generating a final image of sub-surface based on the estimate far-field signature ($\overline{FF}$).

**14.** The method of Claim 13, wherein the error function (E) is defined as $E = \frac{1}{2} \sum_t \left| \varepsilon_i^j(t) \right|^2$, where a difference

function ($\varepsilon$) is given by $\varepsilon_i^j(t) = X_i^j(t) - X_j^i(t)$, with $X_i^j$ being a ghosted trace "j" correlated with a trace "i."

**15.** A method for calculating an estimate far-field signature ($\overline{FF}$) of a seismic source, the method comprising:

receiving (200) seismic data collected with seismic sensors (128) having a variable-depth distribution so that ghost diversity is present;

stacking (202) the seismic data at the sea floor;

calculating (212) in a processor (802) the estimate far-field signature ($\overline{FF}$) based on a ghost period ($t_i$) and a relative amplitude ($\gamma_i$) of two traces from the seismic data, wherein the estimate far-field signature ($\overline{FF}$) is given

by $\widehat{\overline{FF}(f)} = \frac{\sum_i T_i(f) \cdot \overline{G_i(f)}}{\sum_i |G_i(f)|^2}$, wherein $T_i$ is a ghosted estimate far-field signature, $G_i$ a corresponding ghost, and "i" is an index for a given trace;

deghosting the estimate far-field signature ($\overline{FF}$) to obtained a deghosted far-field signature (F); and

generating a final image of sub-surface based on the deghosted far-field signature (F).

Figure 1
(Background Art)

# Figure 2

200

```
┌─────────────────────────────┐
│      Receive Seismic Data    │
└─────────────────────────────┘
              │
              ▼                 202
┌─────────────────────────────┐
│         Flatten, Stack       │
└─────────────────────────────┘
              │
              ▼                 204
┌─────────────────────────────┐
│    Identify Travel Time of Ghost │
└─────────────────────────────┘
              │
              ▼                 206
┌─────────────────────────────┐
│          Set Model           │
└─────────────────────────────┘
              │
              ▼                 208
┌─────────────────────────────┐
│   Estimate Travel Time of Ghost │
└─────────────────────────────┘
              │
              ▼                 210
┌─────────────────────────────┐
│  Relative Amplitude Determination │
└─────────────────────────────┘
              │
              ▼                 212
┌─────────────────────────────┐
│       Deghost Far-Field      │
└─────────────────────────────┘
              │
              ▼                 214
┌─────────────────────────────┐
│ Use Deghost Far-Field for Processing │
└─────────────────────────────┘
              │
              ▼                 216
┌─────────────────────────────┐
│      Generate Final Image    │
└─────────────────────────────┘
```

# Figure 3

Figure 4

# Figure 5

500

| Receive Seismic Data |
|---|

502

| Pre-Processing |
|---|

504

| Main Processing |
|---|

506

| Post-Processing |
|---|

508

| Final Image |
|---|

Figure 6

Figure 7

EP 2 775 322 A2

# Figure 8

800

- 816 CD-ROM
- 820 Display
- 818 Removable Media
- 822 User Input Interface
- 828 Internet
- 801 Server
- 814 CD-ROM Drive
- 812 Disk Drive
- 808 I/O
- 810
- 802 Processor
- 804 RAM
- 806 ROM

EP 2 775 322 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 13415216 B
- EP 0047100 B1
- US 4868794 A
- GB 2468912 A